# EUROPÄISCHE PATENTSCHRIFT

(11) **EP 4 305 335 B1**
(45) Veröffentlichungstag und Bekanntmachung des Hinweises auf die Patenterteilung: **25.02.2026**
(21) Anmeldenummer: 22711479.0
(22) Anmeldetag: 03.03.2022
(51) Int. Cl.: F16L 55/035, F04D 29/60, F04D 29/66, F16F 1/373

(54) **HALTERUNG ZUR BEFESTIGUNG EINER PUMPE**
HOLDER FOR FASTENING A PUMP
SUPPORT DE FIXATION DE POMPE

(30) Priorität: 12.03.2021 DE 102021106098
(43) Veröffentlichungstag der Anmeldung: 17.01.2024
(73) Patentinhaber: Bühler Motor GmbH, 90459 Nürnberg (DE)
(72) Erfinder: BINDIG, Andrea, 90425 Nürnberg (DE); GUNDERMANN, Martin, 90402 Nürnberg (DE); RAUSCH, Harald, 90766 Fürth (DE); BIERL, Daniel, 91220 Schnaittach (DE); WEISKE, Klaus, 90518 Altdorf (DE)
(86) Internationale Anmeldenummer: PCT/DE2022/200034
(87) Internationale Veröffentlichungsnummer: WO 2022/188931

(56) Entgegenhaltungen:
- WO-A1-00/54392
- DE-A1- 102009 029 591
- DE-A1- 102016 209 204
- US-A- 2 936 141

## Beschreibung

Die Erfindung betrifft eine Halterung zur Befestigung mindestens einer Pumpe in einem Kraftfahrzeug gemäß dem Oberbegriff des Anspruchs 1.

Es sind bereits Halterungen zur Befestigung von Pumpen im Kraftfahrzeug bekannt. Die bekannten Halterungen haben jedoch den Nachteil, dass sie an Stabilität verlieren, was im schlimmsten Fall zu einem Herausrutschen der Pumpe aus der Halterung führen kann. Meist sind auch die Herstellung und die Montage der Halterungen komplex.

Aus der WO 00/54392 ist eine Halterung zur Dämpfung von Motorvibrationen von Zirkulationspumpen in Geschirrspülmaschinen bekannt. Die Halterung besteht aus einer Dämpfungsscheibe aus einem elastischen Material, die an der Abdeckung des Motors an dessen Aufhängung montiert wird. Die Dämpfungsscheibe ist von einer Aufhängeklammer umfasst die ihrerseits am Rahmen des Haushaltsgeräts befestigt ist.

US 2,936,141 bezieht sich auf eine Motorbefestigungsbuchse aus einem einstückigen elastischen Material, der aus einem inneren und einem äußeren Ring gebildet ist, die mit Speichen verbunden sind. Eine Stützhalterung umgibt die elastische Buchse an dessen Äußeren.

Aufgabe der Erfindung besteht in der Ausbildung einer Halterung zur Befestigung mindestens einer Pumpe in einem Kraftfahrzeug, die eine erhöhte Stabilität und eine einfache Montage gewährleistet sowie Schallübertragungen und Vibrationen vom Bauteil dämpft.

Diese Aufgabe wird gelöst durch die Halterung gemäß den Merkmalen des Patentanspruchs 1.

Gemäß der Erfindung weist die Halterung zur Befestigung mindestens einer Pumpe in einem Kraftfahrzeug ein elastisches Dämpfungselement mit einem Innenring und einem Außenring auf, wobei der Innenring und der Außenring über zumindest ein Verbindungselement miteinander in Verbindung stehen, wobei der Innenring die Pumpe aufnimmt. Ein an einem passenden Gegenstück im Fahrzeug montierbares Halteelement ist mittels eines stoffschlüssigen Verfahrens in den Außenring eingebracht und ist über den ganzen Umfang von dem Außenring (4) umschlossen. Durch das Dämpfungselement an der Halterung werden Schallübertragungen und Vibrationen der mindestens einen Pumpe gedämpft. Das Halteelement in dem Außenring verbessert die Stabilität der Halterung. Außerdem wird ein Herausrutschen der mindestens einen Pumpe aus der Halterung verhindert. Das Halteelement ist mittels eines stoffschlüssigen Verfahrens in den Außenring eingebracht. Dies ermöglicht einen einfachen und kostengünstigen Schutz des Halteelements vor Korrosion und Verschleiß. Von Vorteil ist, dass das Halteelement vollständig und lückenlos über den ganzen Umfang von dem Außenring umschlossen ist. Dadurch ist das Halteelement vor Korrosion oder Verschleiß geschützt. Die Vulkanisation oder Umspritzung des Halteelements über seinen ganzen Umfang schützt das Halteelement zusätzlich vor einer Verformung.

Vorzugsweise ist das Halteelement mittels Vulkanisation oder Umspritzung in den Außenring eingebracht. Dies führt zu einer stoffschlüssigen Verbindung zwischen dem Halteelement und dem Außenring. Zusätzlich entsteht dadurch eine kraft- und/oder formschlüssige Verbindung zwischen der Halterung und der mindestens einen Pumpe. Durch die Vulkanisation oder Umspritzung des Halteelements in den Außenring entfällt ein separater Montageschritt, da das Halteelement nicht zusätzlich in den Außenring montiert werden muss.

Vorteilhaft ist, dass das Halteelement zumindest teilweise als Blechring ausgebildet ist. Der Blechring kann aus einem Metallband geformt sein. Alternativ kann das Halteelement auch aus einem anderen Material, wie zum Beispiel Kunststoff, oder aus einer Kombination mehrerer Materialien ausgebildet sein.

In einer Weiterbildung der Erfindung weist das Halteelement Befestigungselemente auf, welche von dem Außenring nicht vollständig umschlossen sind. Die Befestigungselemente ragen in radialer Richtung aus dem Außenring hervor. Denkbar ist auch ein axiales oder tangentiales Herausragen der Befestigungselemente aus dem Außenring. Durch die Befestigungselemente kann die Halterung an einem passenden Gegenstück am Kraftfahrzeug montiert werden.

Von Vorteil ist, dass ein erstes Befestigungselement als Kontaktzunge und ein zweites Befestigungselement als Klemmzunge ausgebildet sind. Durch die Kontaktzunge kann die Halterung am passenden Gegenstück des Kraftfahrzeugs durch Schrauben, Stifte, Hebel oder dem Fachmann geläufige alternative Befestigungsart befestigt werden. Die Kontaktzunge weist zu diesem Zwecke zum Beispiel eine Bohrung oder Ausnehmung für die Befestigung auf und ist von dem Außenring in axialer Richtung beabstandet. Die Klemmzunge greift in eine korrespondierende Ausnehmung am Kraftfahrzeug ein und stellt eine Klemmverbindung dar. Bevorzugt verläuft die Klemmzunge in einem Abstand zum Außenring in einem definierten Radius in axialer Richtung und bildet näherungsweise einen Halbkreis aus.

Vorteilhaft ist, dass die Befestigungselemente mit korrespondierenden Gegenstücken des Fahrzeugs, insbesondere durch Form- und/oder Kraftschluss, zusammenwirken. Die Befestigungselemente ermöglichen dadurch eine schnelle und einfache Montage der Halterung am Kraftfahrzeug.

In einer Weiterbildung der Erfindung weist der Außenring und/oder der Innenring über den Umfang verteilt Aussparungen auf. Durch die Aussparungen besitzt der Außenring und/oder Innenring unterschiedlich radiale Aussteifungen, die zusätzlich eine Verformung der Halterung vermeiden. Zusätzlich wird durch die Aussparungen am Außenring und/oder Innenring Gewicht gespart.

In einer Weiterbildung der Erfindung sind über den Umfang des Dämpfungselements Verbindungselemente verteilt angeordnet.

Vorteilhaft ist, dass die Verbindungselemente bevorzugt V-förmig als Speichen oder Stege ausgebildet sind. Prinzipiell können die Verbindungselemente auch alternative Formgebungen aufweisen. Der Innenring und der Außenring sind durch die Verbindungselemente miteinander verbunden. Durch die V-förmigen Verbindungselemente wird eine Verdrehung des Außenrings und Innenrings gegeneinander bei der Montage der mindestens einen Pumpe am Gegenstück des Kraftfahrzeugs hin verhindert. Zudem wird durch die V-förmigen Verbindungselemente der Kraftfluss optimiert.

Bei der Montage der mindestens einen Pumpe in die Halterung wird der Innenring aufgedehnt und mittels Pressung auf die Pumpe aufgebracht. Durch die Verbindungselemente zwischen dem Außenring und dem Innenring wird die Aufdehnung des Innenrings nicht an den Außenring weitergegeben und dadurch das Halteelement in dem Außenring nicht verformt.

Von Vorteil ist, dass eine ungerade und/oder gerade Anzahl an Verbindungselementen vorgesehen ist. Die Verbindungselemente dienen zusätzlich zur Dämpfung des Schalls und der Vibrationen. Bevorzugt wird eine ungerade Anzahl von Verbindungselementen, da diese die Aufnahme der harmonischen Schwingungen des Bauteils / Pumpe vermindern.

In einer Weiterbildung der Erfindung sind an dem Innenring zumindest an einer Seite eine Fase und/oder eine Wulst ausgebildet. Diese Fase dient der einfacheren Einführung der mindestens einen Pumpe in die Halterung. Zudem verhindert die Wulst das Herausrutschen der mindestens einen Pumpe aus der Halterung.

In einer weiteren vorteilhaften Ausgestaltung ist an dem Innenring zumindest eine Aufnahme für eine Haltenase einer Pumpe ausgebildet. Hierdurch kann die Pumpe bei der Montage zusätzlich befestigt werden und ein Verdrehen wird erschwert.

Vorteilhaft ist, dass der Innenring konisch ausgebildet ist. Dadurch kann die mindestens eine Pumpe bei der Montage passgenau in den Halter aufgenommen werden.

In einer Weiterbildung der Erfindung weist die Halterung ein Dämpfungselement mit einer Mehrzahl von Innenringen und Außenringen auf, die gemäß der vorherigen Ausgestaltungen ausgebildet sind, zur Aufnahme mehrerer Pumpen. In dem Dämpfungselement mit Halteelement können mehrere Innenringe und Außenringe ausgebildet sein, um mehrere Pumpen aufzunehmen. Dies hat den Vorteil, dass nicht jede einzelne Pumpe mit einer Halterung an einem Gegenstück im Kraftfahrzeug befestigt werden muss. Das Gegenstück im Kraftfahrzeug benötigt somit nur die korrespondierenden Klemmbereiche bzw. Bohrungen, an denen die Befestigungselemente (Kontaktzunge und Klemmzunge) befestigt werden. Zusätzlich spart diese Halterung Bauraum, ist kompakt aufgebaut und gewährleistet eine einfache Montage mehrerer Pumpen gleichzeitig.

Die Erfindung ist nicht auf die genannten Ausführungsbeispiele beschränkt. Vielmehr sind alle Ausführungsvarianten, die im Rahmen der fachmännischen Tätigkeit und geringfügiger fachmännischer Änderungen umgesetzt werden, enthalten.

Ausführungsbeispiele der Erfindung werden nachfolgend anhand der Zeichnungen näher erläutert. Es zeigen:
Fig. 1 eine räumliche Darstellung der Halterung
Fig. 2 die Halterung gemäß Fig. 1 in einer anderen Perspektive
Fig. 3 eine räumliche Darstellung der Halterung
Fig. 4 die Halterung gemäß Fig. 3 in einer anderen Perspektive
Fig. 5 die Halterung zur Aufnahme mehrerer Pumpen

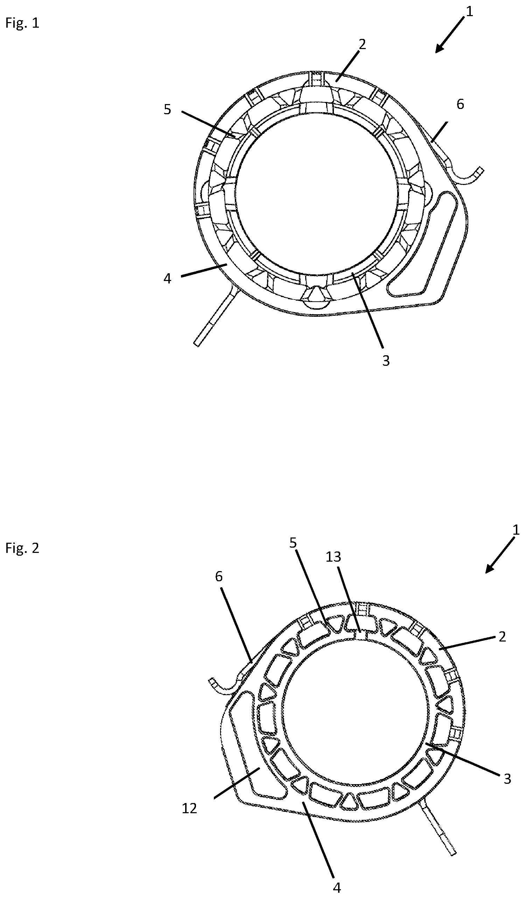

Fig. 1 zeigt eine räumliche Darstellung der erfindungsgemäßen Halterung 1 zur Befestigung mindestens einer Pumpe in einem Kraftfahrzeug, umfassend ein elastisches Dämpfungselement 2 mit einem Innenring 3 und einem Außenring 4. Der Innenring 3 und der Außenring 4 stehen über zumindest ein Verbindungselement 5 miteinander in Verbindung. Der Innenring 3 ist zur Aufnahme der Pumpe und der Außenring 4 zur Aufnahme eines Halteelements 6 zur Montage am passenden Gegenstück im Fahrzeug vorgesehen.

Fig. 2 zeigt die Halterung 1 gemäß der Fig. 1 in einer anderen Perspektive. Das Dämpfungselement 2 weist einen Innenring 3 und einen Außenring 4 auf, die durch Verbindungselemente 5 miteinander verbunden sind. Eine Auskerbung 12 in dem Dämpfungselement 2 dient der Gewichtsreduktion der Halterung. Es können auch mehrere Auskerbungen vorgesehen sein. Mindestens eine Aufnahme 13 ist am Innenring 3 vorgesehen, die mit einer (optionalen) Haltenase an der Pumpe korrespondiert. Die Pumpe kann bei der Montage zusätzlich befestigt werden und ein Verdrehen wird erschwert. Es können auch mehrere Aufnahmen vorgesehen sein.

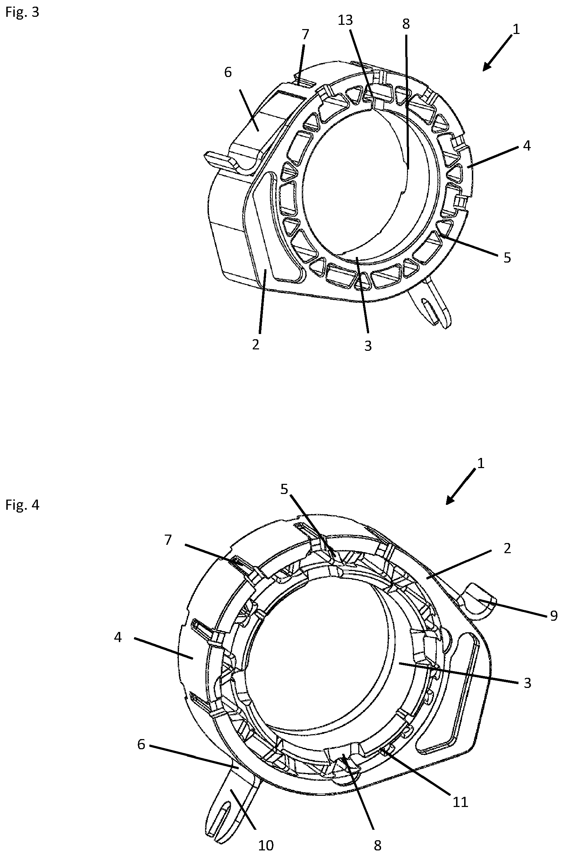

Fig. 3 zeigt die Halterung 1 umfassend das Dämpfungselement 2 mit dem Innenring 3 und dem Außenring 4, die über Verbindungselemente 5 miteinander verbunden sind. In dem Außenring 4 ist das Halteelement 6 einvulkanisiert oder umspritzt. Das Halteelement 6 kann auch in nicht erfinderischer Weise als Einlegeteil durch den Außenring 4 geführt sein oder in den Außenring eingepresst sein oder auf den Außenring überpresst sein. Der Außenring 4 und der Innenring 3 weisen Ausnehmungen 7, 8 auf.

Fig. 4 zeigt die Halterung 1 gemäß der Fig. 3 in einer anderen Perspektive umfassend das Dämpfungselement 2 mit dem Innenring 3 und dem Außenring 4, die über Verbindungselemente 5 miteinander verbunden sind. In dem Außenring 4 und dem Innenring 3 sind Ausnehmungen 7, 8 ausgebildet. Aus dem Außenring 4 ragen die Befestigungselemente 9, 10 heraus, die als Kontaktzunge und Klemmzunge ausgebildet sind. An dem Innenring 3 ist in radialer Richtung eine Fase 11 ausgebildet. Eine Wulst kann ferner vorgesehen sein, um ein Herausrutschen der Pumpe aus der Halterung zu vermeiden.

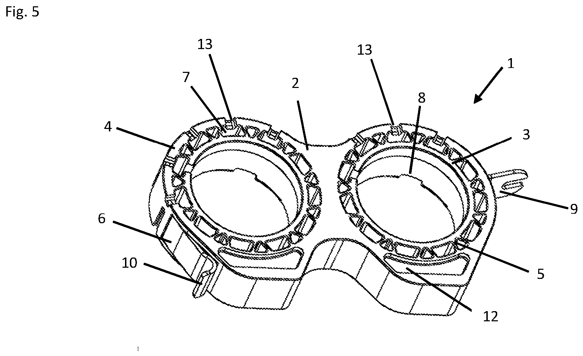

Fig. 5 zeigt die erfindungsgemäße Halterung 1 mit einem Dämpfungselement 2 mit einer Mehrzahl von Innenringen 3 und Außenringen 4, die zur Aufnahme von mehreren Pumpen ausgebildet ist. Der Innenring 3 und der Außenringe 4 sind über Verbindungselemente 5 miteinander verbunden. In dem Außenring 4 und dem Innenring 3 sind Ausnehmungen 7, 8 ausgebildet. Aus dem Außenring 4 ragen die Befestigungselemente 9, 10 heraus, die als Kontaktzunge und Klemmzunge ausgebildet sind. In dem Dämpfungselement 2 ist eine Mehrzahl von Auskerbungen 12 ausgebildet.

### Bezugszeichenliste

- 1: Halterung
- 2: Dämpfungselement
- 3: Innenring
- 4: Außenring
- 5: Verbindungselement
- 6: Halteelement
- 7: Aussparungen Außenring
- 8: Aussparungen Innenring
- 9: Erstes Befestigungselement
- 10: Zweites Befestigungselement
- 11: Fase
- 12: Auskerbung
- 13: Aufnahme

## Patentansprüche

1. Halterung (1) zur Befestigung mindestens einer Pumpe in einem Kraftfahrzeug, umfassend ein elastisches Dämpfungselement (2) mit einem Innenring (3) und einem Außenring (4), wobei der Innenring (3) und der Außenring (4) über zumindest ein Verbindungselement (5) miteinander in Verbindung stehen, wobei in dem Innenring die Pumpe aufnehmbar ist, **dadurch gekennzeichnet, dass** ein an einem passenden Gegenstück im Fahrzeug montierbares Halteelement (6) mittels eines stoffschlüssigen Verfahrens in den Außenring (4) eingebracht ist und über den ganzen Umfang des Halteelements von dem Außenring (4) umschlossen ist.

2. Halterung (1) nach Anspruch 1, **dadurch gekennzeichnet, dass** das Halteelement (6) mittels Vulkanisation oder Umspritzung in den Außenring (4) eingebracht ist.

3. Halterung (1) nach einem der vorherigen Ansprüche, **dadurch gekennzeichnet, dass** das Halteelement (6) zumindest teilweise als Blechring ausgebildet ist.

4. Halterung (1) nach einem der vorherigen Ansprüche, **dadurch gekennzeichnet, dass** das Halteelement (6) Befestigungselemente (9, 10) aufweist, welche von dem Außenring (4) nicht vollständig umschlossen sind.

5. Halterung (1) nach Anspruch 4, **dadurch gekennzeichnet, dass** ein erstes Befestigungselement (9) als Kontaktzunge und ein zweites Befestigungselement (10) als Klemmzunge ausgebildet sind.

6. Halterung (1) nach Anspruch 4 oder 5, **dadurch gekennzeichnet, dass** die Befestigungselemente (9, 10) mit korrespondierenden Gegenstücken des Fahrzeugs, insbesondere durch Form- oder Kraftschluss, zusammenwirken.

7. Halterung (1) nach einem der vorherigen Ansprüche, **dadurch gekennzeichnet, dass** der Außenring (4) und/oder der Innenring (3) über den Umfang verteilt Aussparungen (7) aufweist.

8. Halterung (1) nach einem der vorherigen Ansprüche, **dadurch gekennzeichnet, dass** die Verbindungselemente (5) über den Umfang des Dämpfungselements (2) verteilt angeordnet sind.

9. Halterung (1) nach einem der vorherigen Ansprüche, **dadurch gekennzeichnet, dass** die Verbindungselemente (5) V-förmig als Speichen oder Stege ausgebildet sind.

10. Halterung (1) nach einem der vorherigen Ansprüche, **dadurch gekennzeichnet, dass** eine ungerade und/oder gerade Anzahl an Verbindungselementen (5) vorgesehen ist.

11. Halterung (1) nach einem der vorherigen Ansprüche, **dadurch gekennzeichnet, dass** an dem Innenring (3) zumindest an einer Seite eine Fase (11) und/oder eine Wulst ausgebildet ist.

12. Halterung (1) nach einem der vorherigen Ansprüche, **dadurch gekennzeichnet, dass** an dem Innenring (3) zumindest eine Aufnahme (13) für eine Haltenase einer Pumpe ausgebildet ist.

13. Halterung (1) nach einem der vorherigen Ansprüche, **dadurch gekennzeichnet, dass** der Innenring (3) konisch ausgebildet ist.

14. Halterung (1) nach einem der vorherigen Ansprüche, **dadurch gekennzeichnet, dass** die Halterung (1) ein Dämpfungselement (2) mit einer Mehrzahl von Innenringen (3) und Außenringen (4), die gemäß der vorherigen Ansprüche ausgebildet sind, zur Aufnahme mehrerer Pumpen umfasst.

## Claims

1. A holding means (1) for fastening at least one pump in a motor vehicle, comprising an elastic damping element (2) with an inner ring (3) and an outer ring (4), wherein the inner ring (3) and the outer ring (4) are connected together by way of at least one connecting element (5), wherein the pump can be received in the inner ring, **characterised in that** a holding element (6) which can be mounted on a matching counter-part in the vehicle is introduced into the outer ring (4) by means of a material-to-material method and is encompassed by the outer ring (4) over the entire circumference of the holding element.

2. A holding means (1) according to claim 1, **characterised in that** the holding element (6) is introduced into the outer ring (4) by means of vulcanisation or moulding-in.

3. A holding means (1) according to one of the preceding claims, **characterised in that** the holding element (6) is formed at least partially as a sheet-metal ring.

4. A holding means (1) according to one of the preceding claims, **characterised in that** the holding element (6) has fastening elements (9, 10) which are not completely encompassed by the outer ring (4).

5. A holding means (1) according to claim 4, **characterised in that** a first fastening element (9) is formed as a contact tongue and a second fastening element (10) as a clamping tongue.

6. A holding means (1) according to claim 4 or 5, **characterised in that** the fastening elements (9, 10) cooperate with corresponding counter-parts of the vehicle, in particular by a form-fit or force-fit.

7. A holding means (1) according to one of the preceding claims, **characterised in that** the outer ring (4) and/or the inner ring (3) has/have cutouts (7) distributed over the circumference.

8. A holding means (1) according to one of the preceding claims, **characterised in that** the connecting elements (5) are arranged distributed over the circumference of the damping element (2).

9. A holding means (1) according to one of the preceding claims, **characterised in that** the connecting elements (5) are formed in a V-shape as spokes or lands.

10. A holding means (1) according to one of the preceding claims, **characterised in that** an odd and/or even number of connecting elements (5) is provided.

11. A holding means (1) according to one of the preceding claims, **characterised in that** a chamfer (11) and/or a bead is/are formed on the inner ring (3) at least on one side.

12. A holding means (1) according to one of the preceding claims, **characterised in that** at least one receptacle (13) for a holding lug of a pump is formed on the inner ring (3).

13. A holding means (1) according to one of the preceding claims, **characterised in that** the inner ring (3) is formed conically.

14. A holding means (1) according to one of the preceding claims, **characterised in that** the holding means (1) comprises a damping element (2) with a plurality of inner rings (3) and outer rings (4) which are formed according to the preceding claims, for receiving a plurality of pumps.

## Revendications

1. Support (1) pour la fixation d'au moins une pompe dans un véhicule à moteur, comprenant un élément d'amortissement (2) élastique avec une bague intérieure (3) et une bague extérieure (4), dans lequel la bague intérieure (3) et la bague extérieure (4) sont reliées l'une à l'autre par l'intermédiaire d'au moins un élément de liaison (5), dans lequel la pompe peut être reçue dans la bague intérieure,
**caractérisé en ce qu'**un élément de retenue (6) pouvant être monté dans le véhicule sur une contre-partie adaptée est introduit dans la bague extérieure (4) au moyen d'un procédé de liaison de matières et est entouré par la bague extérieure (4) sur toute la circonférence de l'élément de retenue.

2. Support (1) selon la revendication 1, **caractérisé en ce que** l'élément de retenue (6) est introduit dans la bague extérieure (4) par vulcanisation ou surmoulage.

3. Support (1) selon l'une quelconque des revendications précédentes, **caractérisé en ce que** l'élément de retenue (6) est réalisé au moins en partie sous la forme d'une bague en tôle.

4. Support (1) selon l'une quelconque des revendications précédentes, **caractérisé en ce que** l'élément de retenue (6) présente des éléments de fixation (9, 10), qui ne sont pas entièrement entourés par la bague extérieure (4).

5. Support (1) selon la revendication 4, **caractérisé en ce qu'**un premier élément de fixation (9) est réalisé sous la forme d'une languette de contact et un deuxième élément de fixation (10) sous la forme d'une languette de serrage.

6. Support (1) selon la revendication 4 ou 5, **caractérisé en ce que** les éléments de fixation (9, 10) coopèrent avec des contre-parties correspondantes du véhicule, en particulier par liaison par complémentarité de formes ou à force.

7. Support (1) selon l'une quelconque des revendications précédentes, **caractérisé en ce que** la bague extérieure (4) et/ou la bague intérieure (3) présente des évidements (7) répartis sur toute la circonférence.

8. Support (1) selon l'une quelconque des revendications précédentes, **caractérisé en ce que** les éléments de liaison (5) sont disposés de manière répartie sur toute la circonférence de l'élément d'amortissement (2).

9. Support (1) selon l'une quelconque des revendications précédentes, **caractérisé en ce que** les éléments de liaison (5) sont réalisés en forme de V en tant que rayons ou éléments jointifs.

10. Support (1) selon l'une quelconque des revendications précédentes, **caractérisé en ce qu'**un nombre impair et/ou pair d'éléments de liaison (5) est prévu.

11. Support (1) selon l'une quelconque des revendications précédentes, **caractérisé en ce qu'**un chanfrein (11) et/ou un bourrelet est réalisé sur la bague intérieure (3) au moins sur une face.

12. Support (1) selon l'une quelconque des revendications précédentes, **caractérisé en ce qu'**au moins un logement (13) pour un bec de retenue d'une pompe est réalisé sur la bague intérieure (3).

13. Support (1) selon l'une quelconque des revendications précédentes, **caractérisé en ce que** la bague intérieure (3) est réalisée de manière conique.

14. Support (1) selon l'une quelconque des revendications précédentes, **caractérisé en ce que** le support (1) comprend un élément d'amortissement (2) avec une pluralité de bagues intérieures (3) et de bagues extérieures (4), qui sont réalisées selon l'une quelconque des revendications précédentes, pour la réception de plusieurs pompes.
